# EUROPÄISCHE PATENTSCHRIFT

(11) **EP 3 972 865 B1**
(45) Veröffentlichungstag und Bekanntmachung des Hinweises auf die Patenterteilung: **18.11.2026**
(21) Anmeldenummer: 20726399.7
(22) Anmeldetag: 15.05.2020
(51) Int. Cl.: B60K 1/00, B60K 1/04, B62D 21/17

(54) **KRAFTFAHRZEUG MIT EINEM ELEKTRISCHEN ANTRIEB UND EINER KAROSSERIEINTEGRIERTEN SPEICHERZELLENBAUGRUPPE**
MOTOR VEHICLE COMPRISING AN ELECTRIC DRIVE AND A SECONDARY CELL SUBASSEMBLY INTEGRATED INTO THE VEHICLE BODY
VÉHICULE À MOTEUR DOTÉ D'UN MÉCANISME D'ENTRAÎNEMENT ÉLECTRIQUE ET D'UN ENSEMBLE D'ÉLÉMENTS D'ACCUMULATION INTÉGRÉ À LA CARROSSERIE

(30) Priorität: 22.05.2019 DE 102019113701
(43) Veröffentlichungstag der Anmeldung: 30.03.2022
(73) Patentinhaber: Bayerische Motoren Werke Aktiengesellschaft, 80809 München (DE)
(72) Erfinder: EILETZ, Richard, 82041 Deisenhofen (DE); HARRISON, Robert, 84427 Sankt Wolfgang (DE); OTTE, Alexander-Wilhelm, 82281 Egenhofen (DE); LOCH, Robert, 81379 München (DE); WARKOTSCH, Christoph, 80639 München (DE); WEINGARDT, Alexander, 81927 München (DE); BURJA, Andreas, 85716 Unterschleißheim (DE)
(86) Internationale Anmeldenummer: PCT/EP2020/063582
(87) Internationale Veröffentlichungsnummer: WO 2020/234141

(56) Entgegenhaltungen:
- EP-A1- 0 277 293
- WO-A1-2019/021912
- DE-A1- 102005 054 961
- DE-A1- 102005 061 506
- US-A1- 2017 246 943
- US-A1- 2018 105 209
- US-A1- 2020 176 747

## Beschreibung

Die vorliegende Erfindung betrifft ein Kraftfahrzeug mit einem elektrischen Antrieb und einer karosserieintegrierten Speicherzellenbaugruppe.

Bekannte Elektrofahrzeuge weisen eine sogenannte Traktionsbatterie auf, die zur Speicherung von elektrischer Energie für einen Elektroantrieb des Elektrokraftfahrzeugs dient. Eine derartige Traktionsbatterie ist aus Batteriezellen aufgebaut, die wiederum zu Batteriemodulen zusammengefasst sind. Die Batteriezellen bzw. Batteriemodule sind in einem Gehäuse untergebracht, das zum Schutz der Batteriezellen dient und Vorrichtungen enthält, die der Klimatisierung und Steuerung der Batteriezellen dienen. Zum Beispiel ist eine derartige Batteriebaugruppe mit einem Gehäuse in einem Bodenbereich eines Kraftfahrzeugs zwischen Vorder- und Hinterachse des Kraftfahrzeugs angeordnet.

Beispielsweise ist in der DE 10 2013 204 765 A1 eine Speicherzellenbaueinheit zum Speichern von elektrischer Energie für den Antrieb eines Elektromotors eines Kraftfahrzeugs beschrieben. Das Gehäuse ist von unten mit einem linken Seitenschweller und einem rechten Seitenschweller verbunden. Im Falle einer Seitenkollision wird eine Kollisionsenergie durch Verformung des betroffenen Seitenschwellers und einer daran angrenzenden Seitenwand des Gehäuses der Speicherzellenbaueinheit abgebaut. Zum Schutz der in dem Gehäuse untergebrachten Speicherzellen weist das Gehäuse verformbare Energieabsorptionsbereiche auf, die benachbart zu den Seitenschwellern ausgebildet sind.

Darüber hinaus betrifft die WO 2019/021912 A1 ein gekoppeltes Batteriemodul bestehend aus einem ersten Batteriemodul und einem zweiten Batteriemodul mit identischer Struktur. Die beiden Batteriemodule sind an Vorsprüngen, die an jeweiligen Endplatten ausgebildet sind, miteinander mittels einer Platte verschraubt.

Ferner zeigt die US 2018/105209 A1 ein gattungsgemäßes Kraftfahrzeug.

Es ist die Aufgabe der vorliegenden Erfindung, ein Kraftfahrzeug mit einem elektrischen Antrieb und einer karosserieintegrierten Speicherzellenbaugruppe zu schaffen, wobei die Speicherzellenbaugruppe in einer Bodenbaugruppe des Kraftfahrzeugs besser geschützt untergebracht ist, der Integrationsgrad der Bodenbaugruppe erhöht ist und die Bodenbaugruppe bei geringer Bauhöhe eine hohe Kollisionsfestigkeit aufweist.

Diese Aufgabe wird durch ein Kraftfahrzeug gelöst, das die Merkmale von Patentanspruch 1 aufweist. Bevorzugte Weiterbildungen der Erfindung sind in den abhängigen Patentansprüchen genannt.

Gemäß der vorliegenden Erfindung hat ein Kraftfahrzeug einen elektrischen Antrieb und eine karosserieintegrierte Speicherzellenbaugruppe. Die Speicherzellenbaugruppe ist in einer Bodenbaugruppe einer Karosserie des Kraftfahrzeugs angeordnet, d.h. in dieser integriert. Die Bodenbaugruppe weist zumindest eine linke Seitenschwellerstruktur, eine rechte Seitenschwellerstruktur, einen oberen Boden und einen unteren Boden auf. Die Bodenbaugruppe weist ferner eine Mitteltunnelstruktur auf. Durch die Mitteltunnelstruktur verlaufen sowohl Speicherzellenbaugruppenleitungen als auch Fahrzeugbetriebsmittelleitungen und/oder Fahrzeug-E/E-Leitungen.

Durch die Mitteltunnelstruktur können alle internen Leitungen der Speicherzellenbaugruppe platzsparend zentral untergebracht werden. Dies ist insbesondere unter Fertigungs-, Reparatur- und Wartungsgesichtspunkten vorteilhaft. Ferner sind die entsprechenden Leitungen bei einer Seitenkollision des Kraftfahrzeugs gut geschützt, weil sie von den Seitenschwellerstrukturen beabstandet sind. Darüber hinaus beeinträchtigen die so angeordneten Leitungen auch nicht einen Fahrzeuginnenraum (eine Fahrgastzelle) oberhalb der Bodenbaugruppe, d.h. oberhalb des oberen Bodens.

Speicherzellenbaugruppenleitungen sind beispielsweise Stromleitungen (insbesondere Hochvoltleitungen), Datenleitungen (d.h. Signal- bzw. Steuerleitungen) und Kühlleitungen zur Kühlung und/oder Erwärmung der Speicherzellen. Fahrzeugbetriebsmittelleitungen sind beispielsweise Bremsleitungen (hydraulisch oder pneumatisch), Kraftstoffleitungen, Kühlleitungen, Druckluftleitungen, Waschwasserleitungen sowie Luftleitungen für klimatisierte/temperierte Luft bzw. Luft zur Belüftung- und Entlüftung des Fahrzeuginnenraums. Fahrzeug-E/E-Leitungen sind alle Elektronik- bzw. Elektrikleitungen, die im Kraftfahrzeug in einem sogenannten Kabelbaum zusammengefasst sein können und von einem vorderen Bereich des Kraftfahrzeugs zu einem hinteren Bereich des Kraftfahrzeugs verlaufen.

Das erfindungsgemäße Kraftfahrzeug hat einen elektrischen Antrieb, d.h. einen Elektroantrieb. Das Kraftfahrzeug kann lediglich einen Elektroantrieb oder einen weiteren Antrieb, d.h. einen Hybridantrieb bestehend aus einem Elektroantrieb und einer weiteren Antriebsart, wie einem Verbrennungsmotor, aufweisen. Die Speicherzellenbaugruppe bildet hierbei eine Antriebsbatterie, die auch Traktionsbatterie genannt werden kann, für den Elektroantrieb. Häufig wird die Speicherzellenbaugruppe auch als Hochvoltspeicher bezeichnet.

Gemäß einer bevorzugten Weiterbildung der vorliegenden Erfindung weist die die Mitteltunnelstruktur zumindest zwei sich in Fahrzeuglängsrichtung erstreckende Kammern auf.

Hierdurch können bestimmte Leitungen voneinander getrennt durch die Bodenstruktur geführt werden. Die Kammern können derart ausgebildet bzw. angeordnet sein, dass eine Kammer lediglich zur Aufnahme von Speicherzellengruppenleitungen ausgebildet ist. Die andere Kammer kann zur Aufnahme der Fahrzeugbetriebsmittelleitungen und/oder der Fahrzeug-E/E-Leitungen ausgebildet sein. Die Kammer mit den Speicherzellengruppenleitungen kann mehrere seitliche Schnittstellen bzw. Öffnungen an zugeordneten Abschnitten der Speicherzellenbaugruppe zur Zuführung der Leitungen in diese Kammer aufweisen.

Es können auch drei Kammern und mehr Kammern in der Mitteltunnelstruktur ausgebildet sein.

Die Kammern sind derart ausgebildet, dass eine durchgängige Durchführung der Leitungen durch die Bodenbaugruppe möglich ist.

Bevorzugt können die Kammern übereinander (in Fahrzeughochrichtung, in z-Richtung) und/oder nebeneinander (in Fahrzeugquerrichtung, in y-Richtung) angeordnet sein.

Vorteilhaft ist eine der Kammern in einer Vertiefung bzw. durch eine Vertiefung des unteren Bodens ausgebildet. Ebenso vorteilhaft kann eine der Kammern in einer Vertiefung bzw. durch eine Vertiefung des oberen Bodens ausgebildet sein. Vorteilhaft erstreckt sich die Vertiefung des unteren Bodens nach oben, so dass diese nicht von der Bodenbaugruppe vorsteht. Ferner erstreckt sich die Vertiefung des oberen Bodens vorteilhaft nach unten, so dass diese nicht von der Bodenbaugruppe vorsteht.

Hierdurch können entsprechende Leitungen einfach von oben oder unten zugänglich in der Mitteltunnelstruktur klar abgetrennt von der Speicherzellenbaugruppe und insbesondere klar abgetrennt von Leitungen der Speicherzellenbaugruppe untergebracht sein. Vorteilhaft könnten in der Vertiefung des unteren Bodens Betriebsmittelleitungen untergebracht sein. Ferner könnten vorteilhaft in der Vertiefung des oberen Bodens ein Kabelbaum und/oder Luft führende Leitungen einer Innenraumklimatisierung untergebracht sein.

Bevorzugt sind die Kammern zueinander fluiddicht ausgebildet.

So können beispielsweise Fluid führende Leitungen von Strom führenden Leitungen wirksam getrennt werden. Ferner können Auswirkungen eines Kurzschlusses einer Strom führenden Leitung auf die entsprechende Kammer mit den in dieser Kammer verlaufenden Leitungen begrenzt werden. Auch könnte hier ein Spritzwassereintritt von unten in die unterste Kammer auf die unterste Kammer begrenzt werden.

Ferner ist bevorzugt eine Kammer oder sind mehrere Kammern gegenüber der Speicherzellenbaugruppe fluiddicht ausgebildet

Gemäß der vorliegenden Erfindung sind zwischen der Mitteltunnelstruktur und der Seitenschwellerstruktur sowie zwischen dem oberen Boden und dem unteren Boden Speicherzellen bzw. Speicherzellenmodule der Speicherzellenbaugruppe angeordnet.

Hierdurch kann ein in der Bodenbaugruppe zur Verfügung stehender Bauraum optimal für die Speicherzellenbaugruppe genutzt werden, um eine elektrische Reichweite des Kraftfahrzeugs zu erhöhen.

Vorteilhaft sind/ist der obere Boden und/oder der untere Boden karosseriefest ausgebildet sind/ist. Mit anderen Worten sind/ist der obere Boden und/oder der untere Boden integraler Bestandteil des Karosserierohbaus des Kraftfahrzeugs. Wenn sowohl der untere Boden als auch der obere Boden karosseriefest ausgebildet sind, können diese mit entsprechenden verschließbaren Öffnungen versehen sein, um eine Zugänglichkeit zu der Speicherzellenbaugruppe zu Fertigungs-, Wartungs- und Reparaturzwecken zu ermöglichen.

Hierdurch ist die Fertigung vereinfacht, so dass das Kraftfahrzeug bei geringeren Kosten gefertigt werden kann. Ferner ist durch die karosseriefeste Bauweise eine Festigkeit und Steifigkeit des Kraftfahrzeugs erhöht, was Vorteile im Fahrbetrieb und bei einer Kollision des Kraftfahrzeugs hat.

Ferner können/kann der obere Boden und/oder der untere Boden lösbar befestigt sein.

Hierdurch ist ein Inneres der Bodenbaugruppe, nämlich die Speicherzellenbaugruppe, zu Wartungs- und Reparaturzwecken einfach zugänglich. Auch bei der Fertigung des Kraftfahrzeugs hat dies Vorteile, da die Bestandteile der Speicherzellenbaugruppe somit leicht in der Bodenbaugruppe montiert werden können.

Gemäß einer bevorzugten Weiterbildung kann zumindest eine Kammer der Kammern der Mitteltunnelstruktur durch ein offenes Trägerprofil und den oberen Boden ausgebildet sein. Ferner kann zumindest eine Kammer der Kammern in der Mitteltunnelstruktur durch ein offenes Trägerprofil und den unteren Boden ausgebildet sein.

Durch Lösen des jeweiligen Bodens, falls dieser lösbar ausgebildet ist, ist somit die entsprechende Kammer leicht zugänglich.

Eine Kammer der Kammern der Mitteltunnelstruktur kann vorteilhaft auch durch ein geschlossenes Trägerprofil ausgebildet sein.

Gemäß einer bevorzugten Weiterbildung weist die Bodenbaugruppe eine vordere Querträgerstruktur und einen hintere Querträgerstruktur auf. Die Speicherzellenbaugruppe ist zwischen der vorderen Querträgerstruktur und der hinteren Querträgerstruktur angeordnet. Vorteilhaft können/kann die vordere Querträgerstruktur und/oder die hintere Querträgerstruktur eine Schnittstelle für die Speicherzellenbaugruppenleitungen und/oder Fahrzeugbetriebsmittelleitungen und/oder Fahrzeug-E/E-Leitungen und/oder Innenraumentlüftungs- und Innenraumbelüftungsleitungen aufweisen. Ein Abschnitt der Mitteltunnelstruktur kann dabei Bestandteil der Querträgerstruktur sein. Die Querträgerstruktur kann beispielsweise aus einem linken Querträger, der zwischen der linken Seitenschwellerstruktur und der Mitteltunnelstruktur verläuft, und einem rechten Querträger, der zwischen der rechten Seitenschwellerstruktur und der Mitteltunnelstruktur verläuft, und dem angrenzenden Abschnitt der Mitteltunnelstruktur bestehen.

Die Bodenbaugruppe kann weitere Querträgerstrukturen zwischen der vorderen Querträgerstruktur und der hinteren Querträgerstruktur aufweisen.

Vorteilhaft sind die Querträgerstrukturen und/oder die Seitenschwellerstrukturen und/oder die Mitteltunnelstruktur integraler Bestandteil des Karosserierohbaus.

Vorteilhaft können/kann der obere Boden und/oder der untere Boden eine Öffnung entlang der Mitteltunnelstruktur aufweisen. Die Öffnung kann beispielsweise mit einem Deckel verschließbar sein.

Hierdurch ist die Mitteltunnelstruktur zu Reparatur- und Wartungsarbeiten leicht zugänglich.

Es ist auch möglich, dass der untere Boden und/oder der obere Boden im Bereich der Mitteltunnelstruktur zweigeteilt sind, und insbesondere im Bereich der Mitteltunnelstruktur zueinander beabstandet und somit einen Spalt über der Mitteltunnelstruktur bilden.

Auch in diesem Fall ist die Mitteltunnelstruktur zu Reparatur- und Wartungsarbeiten leicht zugänglich.

Der untere Boden und/oder der obere Boden können auch einstückig ausgebildet sein.

Vorteilhaft ist die Bodenbaugruppe zur Aufnahme und Übertragung von Kollisionslasten in Fahrzeugquerrichtung und/oder Fahrzeuglängsrichtung ausgebildet. Zum Beispiel sind die Seitenschwellerstruktur, der obere Boden, der untere Boden und die Mitteltunnelstruktur derart konstruiert, dass sie Kollisionslasten übertragen können. Die Bestandteile der Bodenbaugruppe sind demnach Bestandteil eines Lastpfades bei Kollisionen.

Die Seitenschwellerstruktur kann ferner zur Absorption von Kollisionsenergie durch Verformung ausgebildet sein. Der obere Boden, der untere Boden und die Mitteltunnelstruktur sowie die Querträgerstrukturen sind vorteilhaft hinreichend steif ausgebildet, so dass sie bei Kollisionen nur geringfügig ohne größere Beschädigung der Speicherzellenbaugruppe oder gar nicht verformt werden (zumindest bis zu einem bestimmten Kollisionslastschwellwert).

Bevorzugt ist die Speicherzellenbaugruppe fluiddicht in der Bodenbaugruppe untergebracht.

Hierdurch ist ein Fluidaustausch zwischen der Speicherzellenbaugruppe und dem Fahrzeuginnenraum bzw. einer Kraftfahrzeugumgebung unterbunden.

Insgesamt ist die Speicherzellenbaugruppe von karosserieintegrierter Bauweise - im Gegensatz zu einer Speicherzellenbaugruppe, die als separate Einheit in einem separaten, fluiddichten Gehäuse an einer Fahrzeugkarosserie montierbar ist.

Bevorzugt ist der innere Boden im Wesentlichen eben ausgeführt.

Dies ermöglicht eine Vielzahl von Freiheitsgraden bei einer Fahrzeuginnenausstattung des über der Bodenbaugruppe angeordneten Fahrzeuginnenraums. Insbesondere ermöglicht dies eine größere Variabilität bei der Anordnung von Fahrzeugsitzen in dem Fahrzeuginnenraum.

Vorstehend aufgeführte Weiterbildungen der Erfindung können soweit möglich und sinnvoll beliebig miteinander kombiniert werden.

Es folgt eine Kurzbeschreibung der Zeichnungen.
- Fig. 1: ist eine schematische Schnittansicht einer Bodenbaugruppe einer Karosserie eines Kraftfahrzeugs gemäß einem ersten Ausführungsbeispiel der vorliegenden Erfindung.
- Fig. 2: ist eine schematische Schnittansicht einer Bodenbaugruppe einer Karosserie eines Kraftfahrzeugs gemäß einem zweiten Ausführungsbeispiel der vorliegenden Erfindung.
- Fig. 3: ist eine schematische Schnittansicht einer Bodenbaugruppe einer Karosserie eines Kraftfahrzeugs gemäß einem dritten Ausführungsbeispiel der vorliegenden Erfindung.
- Fig. 4: ist eine schematische Schnittansicht einer Bodenbaugruppe einer Karosserie eines Kraftfahrzeugs gemäß einem vierten Ausführungsbeispiel der vorliegenden Erfindung.
- Fig. 5: ist eine schematische Schnittansicht einer Bodenbaugruppe einer Karosserie eines Kraftfahrzeugs gemäß einem fünften Ausführungsbeispiel der vorliegenden Erfindung.
- Fig. 6: ist eine schematische Draufsicht auf die Bodenbaugruppe der Karosserie des Kraftfahrzeugs gemäß dem ersten bis fünften Ausführungsbeispiel der vorliegenden Erfindung.

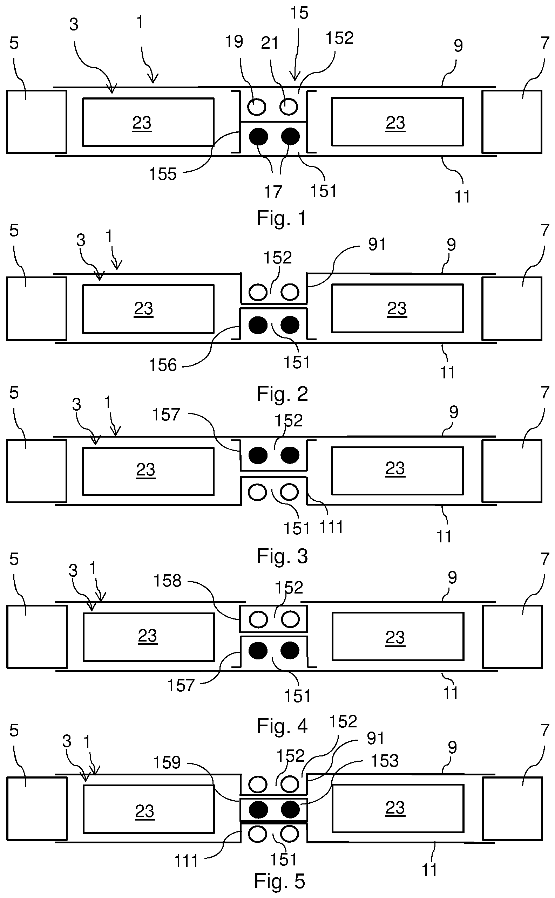

Es folgt eine detaillierte Beschreibung von Ausführungsbeispielen der vorliegenden Erfindung unter Bezugnahme auf Figuren 1 bis 6.

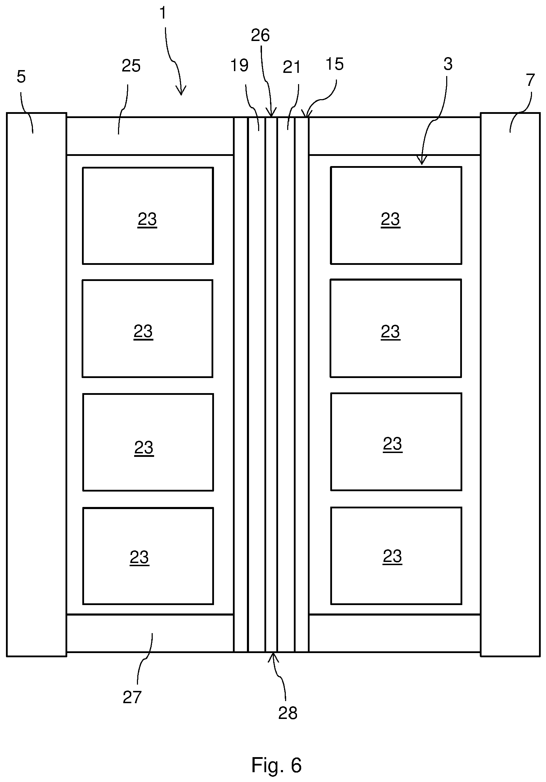

Zunächst erfolgt unter Bezugnahme auf Figur 6 eine Beschreibung der Gemeinsamkeiten der unterschiedlichen Ausführungsbeispiele.

Figur 6 zeigt eine Draufsicht auf eine Bodenbaugruppe 1 eines Kraftfahrzeugs mit elektrischem Antrieb gemäß allen Ausführungsbeispielen der vorliegenden Erfindung, wobei in der Bodenbaugruppe karosserieintegriert eine Speicherzellenbaugruppe 3, d.h. eine Traktionsbatterie bzw. Antriebsbatterie, untergebracht ist. Die Speicherzellenbaugruppe 3 kann auch als Hochvoltspeicher bezeichnet sein.

Die Bodenbaugruppe 1 weist einen linken Seitenschweller 5, einen rechten Seitenschweller 7, eine Mittellängsträgerstruktur 15, sowie eine vordere Querträgerstruktur 25 und eine hintere Querträgerstruktur 27 auf. Die Querträgerstrukturen 25 und 27 bestehen jeweils aus einem linken und rechten Querträger, die mit der Mittellängsträgerstruktur 15 sowie dem linken Seitenschweller 5 bzw. dem rechten Seitenschweller 7 verbunden sind. Ferner weist die Bodenbaugruppe 1 einen oberen Boden 9 und einen unteren Boden 11 auf, die in den Schnittansichten der Figuren 1 bis 5 gezeigt sind. In der Draufsicht von Figur 6 ist der obere Boden 9 weggelassen, so dass ein Teil des Inneren der Bodenbaugruppe 1 zu sehen ist.

Die Speicherzellenbaugruppe 3 weist unter anderem mehrere Speicherzellenmodule 23, in denen jeweils eine Vielzahl von Speicherzellen untergebracht ist. Die Speicherzellenmodule 23 sind in Freiräumen zwischen der Mittellängsträgerstruktur 15, den Seitenschwellern 5, 7 und den Querträgerstrukturen 25, 27 der Bodenbaugruppe 1 untergebracht. Die obere Bodenplatte 9, die Seitenschweller 5, 7 und die Querträgerstrukturen 25, 27 sind Bestandteil eines sogenannten Karosserierohbaus des Kraftfahrzeugs und miteinander verschweißt.

Zusätzlich können noch weitere Querträgerstrukturen zwischen benachbarten Speicherzellenmodulen 23 ausgebildet sein.

An der Unterseite der Bodengruppe 1 ist der untere Boden 11 lösbar und fluiddicht montiert. Der untere (und damit äußere) Boden 11 bildet damit einen Deckel, der zu Wartungs- und Reparaturzwecken der Speicherzellenbaugruppe 3 entfernt werden kann. Die Bodenbaugruppe 1 bildet zusammen mit dem unteren Boden 11 einen fluiddichten Innenraum zur Aufnahme der Speicherzellenbaugruppe 3 mit den Speichermodulen 23, so dass die Speicherzellenbaugruppe 3 gegenüber Umgebungseinflüssen geschützt ist und ebenso keine Stoffe aus der Speicherzellenbaugruppe 3 in die Umgebung oder in den Fahrzeuginnenraum gelangen können. Die Speicherzellenbaugruppe 3 ist damit karosserieintegriert ausgebildet, da die Bodenbaugruppe 1 (mit Ausnahme des unteren Bodens 11) Bestandteil des Karosserierohbaus ist - im Gegensatz zu einem Konzept, bei dem die Speicherzellenbaugruppe / Antriebsbatterie in einem separaten Gehäuse untergebracht ist, das an der Fahrzeugkarosserie lösbar montiert ist.

Die Speicherzellenmodule 23 können an dem unteren Boden 11 befestigt sein. Sie können jedoch auch auf andere Art und Weise in dem Innenraum der Bodenbaugruppe 1 befestigt sein.

Die Querträgerstrukturen 25, 27 weisen Schnittstellen 26 bzw. 28 für die in der Mittellängsträgerstruktur 15 verlaufenden Leitungen auf.

Bezugnehmend auf Figuren 1 bis 5 sind im Folgenden die Unterschiede der einzelnen Ausführungsbeispiele beschrieben.

In Figur 1 ist ein erstes Ausführungsbeispiel einer Bodenbaugruppe 1 in einer schematischen Schnittansicht dargestellt. Die Bodenbaugruppe 1 hat einen oberen Boden 9 und einen unteren Boden 11. Wie in Figur 1 zu sehen ist, befinden sich die Speicherzellenmodule 23 zwischen dem oberen Boden 9 und dem unteren Boden 11. Der obere Boden 9 ist mit den Seitenschwellern 5, 7 und der Mittellängsträgerstruktur 15 verbunden. Der untere Boden 11 ist mit den Seitenschwellern 5, 7 und der Mittellängsträgerstruktur 15 verbunden.

Die Mittellängsträgerstruktur 15 weist eine erste Kammer 152 und eine zweite Kammer 151 auf. Die Mittellängsträgerstruktur 15 ist in diesem Ausführungsbeispiel ein Doppel-T-Träger 155, der zusammen mit dem oberen Boden 9 und dem unteren Boden 11 die erste Kammer 152 und die zweite Kammer 151 bildet.

In der zweiten Kammer 151 sind Speicherzellenbaugruppenleitungen angeordnet, d.h. alle Leitungen die der Speicherzellenbaugruppe zugeordnet sind. Hierzu zählen Hochvoltstromleitungen, die einen Elektromotor des Kraftfahrzeugs mit Strom aus der Speicherzellenbaugruppe versorgen, Datenleitungen für eine Steuereinrichtung der Speicherzellenbaugruppe und Kühlleitungen, die zur Kühlung der Speicherzellenmodule dienen. In der ersten Kammer 152 ist ein sogenannter Kabelbaum 19 mit Fahrzeug-E/E-Leitungen, des Kraftfahrzeugs angeordnet. In dem Kabelbaum 19 verlaufen insbesondere alle Fahrzeug-E/E-Leitungen, die von einem vorderen Bereich des Kraftfahrzeugs zu einem hinteren Bereich des Kraftfahrzeugs verlaufen. Ferner sind in der ersten Kammer 152 Luftleitungen 21 für klimatisierte Luft angeordnet. Somit können Fahrzeugleitungen einfach in der Mittellängsträgerstruktur 15 verlaufen, sind dort geschützt und zentral untergebracht.

Vorteilhaft weist der erste, karosserieintegrale Boden 9 eine oder mehrere Öffnungen im Bereich der ersten Kammer 152 auf, so dass die darin angeordneten Leitungen 19, 21 zugänglich sind. Die Öffnung(en) kann(können) mit einem lösbaren Deckel fluiddicht verschlossen sein.

Figur 2 zeigt ein zweites Ausführungsbeispiel einer Bodenbaugruppe 1 in einer schematischen Schnittansicht. Im Unterschied zu der Bodenbaugruppe 1 des ersten Ausführungsbeispiels hat ein oberer Boden 9 der Bodenbaugruppe 1 des zweiten Ausführungsbeispiels eine im Wesentlichen U-förmige Vertiefung 91 im Bereich einer Mittellängsträgerstruktur 15. Die Vertiefung 91 bildet eine obere, erste Kammer 152 der Mittellängsträgerstruktur 15. Ferner ist eine untere, zweite Kammer 151 durch ein U-Profil bzw. ein Hut-Profil 156, das sich in Längsrichtung über eine gesamte Länge der Bodenbaugruppe 1 erstreckt, und einen unteren Boden 11 gebildet, der ähnlich wie in dem ersten Ausführungsbeispiel ausgeführt ist.

In der unteren Kammer 151 sind Speicherzellenbaugruppenleitungen angeordnet. In der oberen Kammer 152 ist ein Kabelbaum 19 angeordnet. Ferner sind in der oberen Kammer 152 Luftleitungen 21 für klimatisierte Luft angeordnet. Die obere Kammer 152 kann durch einen lösbaren, in der Figur 2 nicht gezeigten Deckel verschlossen sein.

Die untere Kammer 151 und die obere Kammer 152 sind fluiddicht voneinander getrennt.

Abgesehen von den aufgezeigten Unterschieden ist der Aufbau der Bodenbaugruppe 1 des ersten Ausführungsbeispiels im Wesentlichen gleich dem Aufbau der Bodenbaugruppe 1 des zweiten Ausführungsbeispiels.

In Figur 3 ist ein drittes Ausführungsbeispiel einer Bodenbaugruppe 1 in einer schematischen Schnittansicht dargestellt. Im Unterschied zu der Bodenbaugruppe 1 des zweiten Ausführungsbeispiels hat ein unterer Boden 11 eine im Wesentlichen U-förmige Vertiefung 111 im Bereich einer Mittellängsträgerstruktur 15. Die Vertiefung 111 bildet eine untere, zweite Kammer 151 der Mittellängsträgerstruktur 15. Ferner ist eine obere, erste Kammer 152 durch ein U-Profil bzw. ein Hut-Profil 157, das sich in Längsrichtung über eine gesamte Länge der Bodenbaugruppe 1 erstreckt, und einen oberen Boden 9 gebildet, der ähnlich wie in dem ersten Ausführungsbeispiel ausgeführt ist.

In der oberen Kammer 152 sind Speicherzellenbaugruppenleitungen angeordnet. In der unteren Kammer 151 ist ein Kabelbaum 19 angeordnet. Ferner sind in der unteren Kammer 151 Betriebsmittelleitungen 21 angeordnet.

Die untere Kammer 151 und die obere Kammer 152 sind fluiddicht voneinander getrennt.

Abgesehen von den aufgezeigten Unterschieden ist der Aufbau der Bodenbaugruppe 1 des dritten Ausführungsbeispiels im Wesentlichen gleich dem Aufbau der Bodenbaugruppe 1 des zweiten Ausführungsbeispiels.

In Figur 4 ist ein viertes Ausführungsbeispiel einer Bodenbaugruppe 1 in einer schematischen Schnittansicht dargestellt. Im Unterschied zu der Bodenbaugruppe 1 des ersten Ausführungsbeispiels besteht ein oberer Boden 9 aus zwei Teilen, die im Bereich einer Mittellängsträgerstruktur 15 voneinander beabstandet sind und damit einen Spalt über der Mittellängsträgerstruktur 15 ausbilden. Eine obere, erste Kammer 152 der Mittellängsträgerstruktur 15 ist durch ein geschlossenes Profil 158 ausgebildet. Die Teile des oberen Bodens 9 sind mit dem geschlossenen Profil 158 fluiddicht verbunden. Das geschlossene Profil 158 kann zum Beispiel an der Oberseite eine oder mehrere Wartungsöffnung(en) aufweisen, die mit einem lösbaren Deckel verschlossen ist bzw. sind und einen Zugang zu der oberen Kammer 152 zu Fertigungs-, Wartungs- und Reparaturzwecken ermöglicht bzw. ermöglichen. Der obere Boden 9 könnte auch durchgängig analog dem oberen Boden des ersten Ausführungsbeispiels und des dritten Ausführungsbeispiels ausgebildet sein. Alternativ könnte die obere, erste Kammer auch durch ein nach oben offenes Hut-Profil ausgebildet sein. Ferner ist eine untere, zweite Kammer 151 durch ein U-Profil bzw. ein Hut-Profil 157, das sich in Längsrichtung über eine gesamte Länge der Bodenbaugruppe 1 erstreckt, und einen unteren Boden 11 gebildet, der ähnlich wie der untere Boden 11 in dem ersten Ausführungsbeispiel ausgeführt ist.

In der unteren, zweiten Kammer 151 sind Speicherzellenbaugruppenleitungen angeordnet. In der oberen, ersten Kammer 152 ist ein Kabelbaum 19 angeordnet. Ferner sind in der ersten Kammer 152 Betriebsmittelleitungen 21 angeordnet.

Die zweite Kammer 151 und die ersten Kammer 152 sind fluiddicht voneinander getrennt.

Abgesehen von den aufgezeigten Unterschieden ist der Aufbau der Bodenbaugruppe 1 des vieren Ausführungsbeispiels im Wesentlichen gleich dem Aufbau der Bodenbaugruppe 1 des ersten Ausführungsbeispiels.

In Figur 5 ist ein fünftes Ausführungsbeispiel einer Bodenbaugruppe 1 in einer schematischen Schnittansicht dargestellt. Im Unterschied zu den in den anderen Ausführungsbeispielen gezeigten Bodenbaugruppen hat die Bodenbaugruppe 1 des fünften Ausführungsbeispiels eine Mittellängsträgerstruktur 15 mit einer oberen, ersten Kammer 152, einer unteren, zweiten Kammer 151 und einer mittleren, dritten Kammer 153.

Die ersten Kammer 152 des fünften Ausführungsbeispiels ist analog der ersten Kammer 152 des zweiten Ausführungsbeispiels durch eine im Wesentlichen U-förmige Vertiefung 91 in einem oberen Boden 9 ausgebildet. Die zweite Kammer 151 des fünften Ausführungsbeispiels ist analog der zweiten Kammer 151 des dritten Ausführungsbeispiels durch eine im Wesentlichen U-förmige Vertiefung 111 in einem unteren Boden 11 ausgebildet. Zwischen der ersten Kammer 152 und der zweiten Kammer 151 ist ferner die dritte Kammer 153 durch ein geschlossenes Profil 159 ausgebildet, das sich über eine gesamte Länge der Bodenbaugruppe 1 erstreckt.

In der ersten Kammer 152 sind ein Kabelbaum und Klimaluftleitungen angeordnet, die von dem Fahrzeuginnenraum zugänglich sind. Ferner sind in der zweiten Kammer 151 Betriebsmittelleitungen 21, wie Hydraulikbremsleitungen, Waschwasserleitungen usw, angeordnet, die hierdurch einfach von der Unterseite des Fahrzeugs zugänglich sind. Ferner sind in der dritten Kammer 153 alle Speicherzellenbaugruppenleitungen angeordnet. Das Profil 159 der dritten Kammer 153 kann mit gegebenenfalls verschließbaren Wartungsöffnungen versehen sein, die zugänglich sind, wenn der untere Boden 11 und damit auch die U-förmige Vertiefung 111 der zweiten Kammer 151 demontiert sind.

Die zweite Kammer 151, die ersten Kammer 152 und die dritte Kammer 153 sind fluiddicht voneinander getrennt.

Abgesehen von den aufgezeigten Unterschieden ist der Aufbau der Bodenbaugruppe 1 des fünften Ausführungsbeispiels gleich dem Aufbau der Bodenbaugruppe 1 des ersten Ausführungsbeispiels.

Es sind eine viele weitere Varianten einer Mittellängsträgerstruktur mit mehreren Kammern denkbar, in denen entsprechende Leitungen des Kraftfahrzeugs untergebracht sind. Insbesondere sind auch Mittellängsträgerstrukturen mit mehr als drei Kammern denkbar. Ebenso können die Kammern nicht nur übereinander sondern auch nebeneinander angeordnet sein. Ferner kann auch die Zuordnung der unterschiedlichen Leitungsarten zu bestimmten Kammern anders gewählt sein. Auch bei der Ausbildung der Mittellängsträgerstruktur durch (Längs-)Profile, die wiederum alleine oder gemeinsam entsprechende Kammern bilden, sind viele weitere Konstruktionen denkbar.

## Patentansprüche

1. Kraftfahrzeug mit einem elektrischen Antrieb und einer karosserieintegrierten Speicherzellenbaugruppe (3), die in einer Bodenbaugruppe (1) einer Karosserie des Kraftfahrzeugs angeordnet ist, wobei die Bodenbaugruppe (1) zumindest eine linke Seitenschwellerstruktur (5), eine rechte Seitenschwellerstruktur (7) und ferner eine Mitteltunnelstruktur (15) aufweist, durch die Speicherzellenbaugruppenleitungen (17) verlaufen, wobei
die Bodenbaugruppe (1) einen oberen Boden (9) und einen unteren Boden (11) aufweist
und durch die Mitteltunnelstruktur (15) auch Fahrzeugbetriebsmittelleitungen (19) und/oder Fahrzeug-E/E-Leitungen (21) und/oder Innenraumentlüftungs- und Innenraumbelüftungsleitungen verlaufen,
**dadurch gekennzeichnet, dass** zwischen der Mitteltunnelstruktur (15) und der Seitenschwellerstruktur (5, 7) sowie zwischen dem oberen Boden (9) und dem unteren Boden (11) Speicherzellen bzw. Speicherzellenmodule (23) der Speicherzellenbaugruppe (3) angeordnet sind.

2. Kraftfahrzeug nach Patentanspruch 1, wobei die Mitteltunnelstruktur (15) zumindest zwei sich in Fahrzeuglängsrichtung erstreckende Kammern (151, 152, 153) aufweist.

3. Kraftfahrzeug nach Patentanspruch 2, wobei die Kammern (151, 152, 153) übereinander und/oder nebeneinander angeordnet sind.

4. Kraftfahrzeug nach Patentanspruch 2 oder 3, wobei eine der Kammern (151) in einer Vertiefung (111) des unteren Bodens (11) ausgebildet ist und/oder eine der Kammern (152) in einer Vertiefung (91) des oberen Bodens (9) ausgebildet ist.

5. Kraftfahrzeug nach einem der Patentansprüche 2 bis **4,** wobei die Kammern (151, 152, 153) zueinander fluiddicht ausgebildet sind und/oder gegenüber der Speicherzellenbaugruppe (3) fluiddicht ausgebildet sind.

6. Kraftfahrzeug nach einem der Patentansprüche 1 bis 5, wobei der obere Boden (9) und/oder der untere Boden (11) karosseriefest ausgebildet sind/ist.

7. Kraftfahrzeug nach einem der Patentansprüche 1 bis 6, wobei der obere Boden (9) und/oder der untere Boden (11) lösbar befestigt sind/ist.

8. Kraftfahrzeug nach einem der Patentansprüche 1 bis 7, wobei eine Kammer (151, 152) durch ein offenes Trägerprofil (155, 156, 157) und den oberen Boden (9) bzw. den unteren Boden (11) ausgebildet ist.

9. Kraftfahrzeug nach einem der Patentansprüche 1 bis 8, wobei eine Kammer (152, 153) durch ein geschlossenes Trägerprofil (158, 159) ausgebildet ist.

10. Kraftfahrzeug nach einem der Patentansprüche 1 bis 9, wobei die Bodenbaugruppe (1) eine vordere Querträgerstruktur (25) und einen hintere Querträgerstruktur (27) aufweist, wobei die Speicherzellenbaugruppe (3) zwischen der vorderen Querträgerstruktur (25) und der hinteren Querträgerstruktur (27) angeordnet ist, und wobei die vordere Querträgerstruktur (25) und/oder die hintere Querträgerstruktur (27) eine Schnittstelle (26, 28) für die Speicherzellenbaugruppenleitungen als auch Fahrzeugbetriebsmittelleitungen und/oder Fahrzeug-E/E-Leitungen und/oder Innenraumentlüftungs- und Innenraumbelüftungsleitungen aufweisen/aufweist.

11. Kraftfahrzeug nach einem der Patentansprüche 1 bis 10, wobei der obere Boden (9) und/oder der untere Boden (11) eine Öffnung entlang der Mitteltunnelstruktur (15) aufweisen/aufweist.

12. Kraftfahrzeug nach einem der Patentansprüche 1 bis 11, wobei die Bodenbaugruppe (1) zur Aufnahme und Übertragung von Kollisionslasten in Fahrzeugquerrichtung und/oder Fahrzeuglängsrichtung ausgebildet ist, und insbesondere die Seitenschwellerstruktur (5, 7), der obere Boden (9), der untere Boden (11) und die Mitteltunnelstruktur (15) derart konstruiert sind, dass sie Kollisionslasten übertragen können.

## Claims

1. Motor vehicle having an electric drive and a body-integrated storage cell assembly (3), which is arranged in a floor assembly (1) of a body of the motor vehicle, wherein the floor assembly (1) comprises at least a left side sill structure (5), a right side sill structure (7) and furthermore a central tunnel structure (15), through which storage cell assembly lines (17) extend, wherein
the floor assembly (1) comprises an upper floor (9) and a lower floor (11) and through the central tunnel structure (15) also vehicle operating medium lines (19) and/or vehicle E/E lines (21) and/or interior venting and interior ventilation lines extend,
**characterized in that**
between the central tunnel structure (15) and the side sill structure (5, 7) as well as between the upper floor (9) and the lower floor (11), storage cells or storage cell modules (23), respectively, of the storage cell assembly (3) are arranged.

2. Motor vehicle according to claim 1, wherein the central tunnel structure (15) comprises at least two chambers (151, 152, 153) extending in the vehicle longitudinal direction.

3. Motor vehicle according to claim 2, wherein the chambers (151, 152, 153) are arranged one above the other and/or next to one another.

4. Motor vehicle according to claim 2 or 3, wherein one of the chambers (151) is formed in a recess (111) of the lower floor (11) and/or one of the chambers (152) is formed in a recess (91) of the upper floor (9).

5. Motor vehicle according to one of claims 2 to 4, wherein the chambers (151, 152, 153) are formed fluid-tight relative to one another and/or are formed fluid-tight relative to the storage cell assembly (3).

6. Motor vehicle according to one of claims 1 to 5, wherein the upper floor (9) and/or the lower floor (11) is/are formed fixed to the body.

7. Motor vehicle according to one of claims 1 to 6, wherein the upper floor (9) and/or the lower floor (11) is/are detachably fastened.

8. Motor vehicle according to one of claims 1 to 7, wherein a chamber (151, 152) is formed by an open support profile (155, 156, 157) and the upper floor (9) or the lower floor (11), respectively.

9. Motor vehicle according to one of claims 1 to 8, wherein a chamber (152, 153) is formed by a closed support profile (158, 159).

10. Motor vehicle according to one of claims 1 to 9, wherein the floor assembly (1) comprises a front cross member structure (25) and a rear cross member structure (27), wherein the storage cell assembly (3) is arranged between the front cross member structure (25) and the rear cross member structure (27), and wherein the front cross member structure (25) and/or the rear cross member structure (27) comprise(s) an interface (26, 28) for the storage cell assembly lines as well as vehicle operating medium lines and/or vehicle E/E lines and/or interior venting and interior ventilation lines.

11. Motor vehicle according to one of claims 1 to 10, wherein the upper floor (9) and/or the lower floor (11) comprise(s) an opening along the central tunnel structure (15).

12. Motor vehicle according to one of claims 1 to 11, wherein the floor assembly (1) is designed for absorbing and transmitting collision loads in the vehicle transverse direction and/or vehicle longitudinal direction, and in particular the side sill structure (5, 7), the upper floor (9), the lower floor (11) and the central tunnel structure (15) are constructed such that they can transmit collision loads.

## Revendications

1. Véhicule automobile comportant un entraînement électrique et un ensemble de cellules de stockage intégré à la carrosserie (3), qui est disposé dans un ensemble de plancher (1) d'une carrosserie du véhicule automobile, dans lequel l'ensemble de plancher (1) comporte au moins une structure de bas de caisse gauche (5), une structure de bas de caisse droite (7) et en outre une structure de tunnel central (15), à travers laquelle s'étendent des conduites d'ensemble de cellules de stockage (17), dans lequel
l'ensemble de plancher (1) comporte un plancher supérieur (9) et un plancher inférieur (11) et à travers la structure de tunnel central (15) s'étendent également des conduites de fluide de fonctionnement du véhicule (19) et/ou des lignes E/E du véhicule (21) et/ou des conduites d'évacuation d'air et de ventilation de l'habitacle,
**caractérisé en ce que**
entre la structure de tunnel central (15) et la structure de bas de caisse (5, 7) ainsi qu'entre le plancher supérieur (9) et le plancher inférieur (11) sont disposés des cellules de stockage ou des modules de cellules de stockage (23) de l'ensemble de cellules de stockage (3).

2. Véhicule automobile selon la revendication 1, dans lequel la structure de tunnel central (15) comporte au moins deux chambres (151, 152, 153) s'étendant dans la direction longitudinale du véhicule.

3. Véhicule automobile selon la revendication 2, dans lequel les chambres (151, 152, 153) sont disposées les unes au-dessus des autres et/ou les unes à côté des autres.

4. Véhicule automobile selon la revendication 2 ou 3, dans lequel une des chambres (151) est formée dans un creux (111) du plancher inférieur (11) et/ou une des chambres (152) est formée dans un creux (91) du plancher supérieur (9).

5. Véhicule automobile selon l'une des revendications 2 à 4, dans lequel les chambres (151, 152, 153) sont réalisées étanches aux fluides les unes par rapport aux autres et/ou sont réalisées étanches aux fluides par rapport à l'ensemble de cellules de stockage (3).

6. Véhicule automobile selon l'une des revendications 1 à 5, dans lequel le plancher supérieur (9) et/ou le plancher inférieur (11) sont/est réalisé(s) fixe(s) par rapport à la carrosserie.

7. Véhicule automobile selon l'une des revendications 1 à 6, dans lequel le plancher supérieur (9) et/ou le plancher inférieur (11) sont/est fixé(s) de manière détachable.

8. Véhicule automobile selon l'une des revendications 1 à 7, dans lequel une chambre (151, 152) est formée par un profilé support ouvert (155, 156, 157) et le plancher supérieur (9) ou le plancher inférieur (11), respectivement.

9. Véhicule automobile selon l'une des revendications 1 à 8, dans lequel une chambre (152, 153) est formée par un profilé support fermé (158, 159).

10. Véhicule automobile selon l'une des revendications 1 à 9, dans lequel l'ensemble de plancher (1) comporte une structure de traverse avant (25) et une structure de traverse arrière (27), dans lequel l'ensemble de cellules de stockage (3) est disposé entre la structure de traverse avant (25) et la structure de traverse arrière (27), et dans lequel la structure de traverse avant (25) et/ou la structure de traverse arrière (27) comporte(nt) une interface (26, 28) pour les conduites d'ensemble de cellules de stockage ainsi que des conduites de fluide de fonctionnement du véhicule et/ou des lignes E/E du véhicule et/ou des conduites d'évacuation d'air et de ventilation de l'habitacle.

11. Véhicule automobile selon l'une des revendications 1 à 10, dans lequel le plancher supérieur (9) et/ou le plancher inférieur (11) comporte(nt) une ouverture le long de la structure de tunnel central (15).

12. Véhicule automobile selon l'une des revendications 1 à 11, dans lequel l'ensemble de plancher (1) est conçu pour absorber et transmettre des charges de collision dans la direction transversale du véhicule et/ou dans la direction longitudinale du véhicule, et en particulier la structure de bas de caisse (5, 7), le plancher supérieur (9), le plancher inférieur (11) et la structure de tunnel central (15) sont construits de manière à pouvoir transmettre des charges de collision.
